(19) Europäisches Patentamt
European Patent Office
Office européen des brevets

(11) Publication number : 0 484 054 A1

(12) # EUROPEAN PATENT APPLICATION

(21) Application number : 91309846.3

(22) Date of filing : 24.10.91

(51) Int. Cl.$^5$ : C08K 5/32, C08G 75/04

(30) Priority : 30.10.90 IE 3895/90

(43) Date of publication of application : 06.05.92 Bulletin 92/19

(84) Designated Contracting States : DE FR GB IT

(71) Applicant : LOCTITE (IRELAND) Ltd.
Whitestown Industrial Estate
Tallaght, Co. Dublin 24 (IE)

(72) Inventor : Dowling, Joseph P.
21 Kilvere
Rathfarnham, Dublin 14 (IE)
Inventor : Richardson, Sarah C.
10 Riversdale Grove
Terenure, Dublin 6 W (IE)
Inventor : Quigley, Killian
22 Farmhill Road
Goatstown, Dublin 14 (IE)

(74) Representative : Marchant, James Ian et al
Elkington and Fife Prospect House 8
Pembroke Road
Sevenoaks, Kent TN13 1XR (GB)

(54) **Stabilised thiol-ene compositions.**

(57) Curable thiol-ene compositions in which the 'ene is not a bicyclic compound or does not have a polybutadiene backbone are stabilised by addition of a non-acidic Nitroso compound.

EP 0 484 054 A1

This invention relates to curable thiol-ene compositions and especially to the use of particular stabilisers therein.

The synthesis of polythioethers by crosslinking polyenes with polythiols is a process which is well recognised in the art. The curing process is frequently one of photopolymerization initiated by actinic light, in particular light in the UV-visible range. Polymerization may also be effected by the use of high energy radiation and by exposure of the reactants to chemical free radical generating agents, usually thermally activated.

The polymerization mechanism of polyene-polythiol systems is not fully understood. Consequently, the reason for formulation instability in the dark at ambient temperature is also unclear.

Some thiol-ene compositions are available which claim to have a shelf life of 4-6 months at room temperature. However a shelf life of 1 year at room temperature is desirable. In an effort to prolong the shelf-life of the known formulations it is recommended that the formulations be stored refrigerated. However, refrigeration of large quantities of polythiol-polyene formulations is costly and space-consuming.

In European Application No. 90312266.1 filed November 9 1990 we have described the use of non-acidic nitroso compounds as stabilisers in thiol-ene compositions in which the 'ene is a bicyclic compound such as norbornene.

The use of nitroso compounds has been described to inhibit polymerization in non-thiol containing systems. According to the Description of prior art in U.S. Patent 4,168,982, Hungarian Patent Specification No. 150,550 (1963) describes the use of p-aminonitroso-benzene and alpha-nitroso-beta-naphthol as free radical polymerization inhibitors in styrene systems; U.S. Patent Specification No. 3,625,696 describes thermal polymerization inhibition by N-nitrosocyclohexylhydroxylamine salts; inhibition of styrene and vinyl acetate polymerizations by the use of 4-nitrosophenol, 1,4-dinitrosobenzene, nitrosoresorcinol, p-nitrosodimethylaniline and other nitroso compounds are described in Chimia (Aaray), 19, p.116 (1965), and Kinetics and Catalysis (USSR), 6, p.175-181 (1965); and U.S. Patent Specification No. 3,203,801 describes the use of N-substituted p-nitrosoanilines as sensitometric modifiers for photopolymerization systems.

Similarly U.S. Patent Specification No. 4,168,982 itself describes the use of nitroso dimers to selectively inhibit thermally-induced free radical polymerization. The nitroso dimers dissociate to form the active nitroso monomer which produces the stabilizing effect. In the photographic and printing industry, stabilizers which inhibit dark reactions (i.e. thermal polymerization) without inhibiting photopolymerization are known. Japanese Patent Application Nos. 88/170401 (Wade et al), 86/103150 (Fujikawa et al), 86/57271 (Ishii et al), 86/481 (Kuroda), 86/4578 (Kuroda), 79/31727 (Hosaka et al) and 74/59892 (Manamii et al), describe the use of N-nitrosophenylhydroxylamine derivatives as polymerisation inhibitors. In particular, the aluminium salt of N-nitrosophenylhydroxylamine has been described for use as a stabiliser in vinyl polymer compositions (88/170401), the production of photosensitive printing plates comprising polyvinylacetate and acrylates (86/103150), the production of embossed decorative materials using inks comprising PVC and trimethylolpropane trimethacrylate (86/57271), embossed sheets again using PVC sheets with a photosensitive resin coating (86/841, 86/4578), the production of photosensitive resin (79/31727) and in unsaturated polyester compositions (74/59892).

Japanese Patent Application No. 79/106307 describes nitrosophenylhydroxylamine salts, in particular, the aluminium salt of N-nitrosophenylhydroxylamine as polymerization inhibitors for photocurable printing inks comprising Epikote 828 and acrylic acid.

European Patent Application 0,289,852 A1 describes a radiation curable pressure sensitive adhesive composition comprising:

(A) 100 parts by weight of a hydrogenated polybutadiene applied oligomer which has one or more ethylenically unsaturated terminal radicals in its molecule and in which 70% or more of intramolecular carbon-carbon double bonds has been hydrogenated;

(B) from 0.2 to 20 parts by weight of a chain transfer agent; and

(C) from 0.001 to 1.0 parts by weight of a thermal polymerization inhibitor selected from metal complexes of N-nitrosophenylhydroxylamine. Such a composition is said to have excellent storage stability and curing property. Among illustrative examples of chain transfer agents are mentioned thiols such as pentaerythritol tetrakis (B-thiopropionate). The preferred amount of the chain transfer agent is from 2 to 15 parts by weight per 100 parts by weight of the oligomer.

If this amount exceeds 20 parts by weight, the curing is stated to be insufficient. If the amount of the thermal polymerization inhibitor exceeds 1.0 parts by weight, the radiation curing is stated to be inhibited. The preferred range is from 0.01 to 0.1 parts by weight.

European Patent Application 0,289,852 A1 is concerned with a pressure sensitive adhesive composition of a particular type, having a polybutadiene backbone. A relatively small proportion of a thiol is suggested as a chain transfer agent. However there is no teaching concerning thiol-ene compositions in which thiol and 'ene are present in a ratio of molar equivalence.

The effect of a stabiliser is specific to particular monomers and cannot be predicted. It has now surprisingly

been found that a non-acidic nitroso compound has significant advantages over a number of conventional stabilisers in stabilising thiol-ene compositions in which the 'ene is an acrylic or allylic compound.

The present invention provides polymerizable composition comprising:

(i) a 'ene compound having at least two acrylate or allyl groups per average molecule (not being a bicyclic compound or having a polybutadiene backbone),

(ii) a compound having at least two pendant or terminally positioned -SH functional groups per average molecule, said -SH functional groups being approximately in molar equivalence with unsaturated groups in the 'ene compound, and

(iii) a stabilizing amount of a non-acidic nitroso compound.

The mole ratio of 'ene groups to thiol groups may vary from about 0.75/1 to about 1.5/1.

The term "acrylate" as used herein includes "methacrylate".

Preferably, the polymerizable composition further comprises an effective amount of a free radical initiator and/or a photocuring rate accelerator.

The 'ene compound having at least two acrylate or allyl groups per average molecule may be any of those known in the prior art (not being a bicyclic compound or having a polybutadiene backbone). Suitable compounds are described in G.B. 1,312,530 W.R. Crace & Co.

The preferred polyenes are methacrylic and acrylic acid diesters of ethylene glycol and the polyethylene glycols, e.g. diethylene glycol, triethylene glycol, tetraethylene glycol, or mixtures of those ether alcohols; methacrylic and acrylic diesters of polymethylene glycols e.g. trimethylene glycol, hexamethylene glycol. Another class consists of esters formed between one molecule of acrylic or methacrylic acid and one molecule of allyl or crotyl alcohol. More specific polyene examples include but are not limited to divinylbenzene, diisopropenyldiphenyl, crotyl methacrylate, 1,3-butylene glycol diacrylate, 1,4-butylene glycol diacrylate, diethylene glycol diacrylate, diethylene glycol dimethacrylate, 1,6-hexane diol diacrylate, pentaerythritol tetraacrylate, triethylene glycol diacrylate, trimethylolpropane triacrylate, allyl methacrylate, 1,3-butylene glycol dimethacrylate, ethylene glycol dimethacrylate, polyethylene glycol dimethacrylate having 5-10 $CH_2CH_2O$ units, tetraethylene glycol dimethacrylate, triethylene glycol dimethacrylate, and trimethylolpropane trimethacrylate.

The polythiol components may be any of those known in the prior thiol-ene art. The most common polythiol compounds are described in US Patent Specification No. 3,661,744. The desirable characteristics of a polythiol suitable for use in thiolene systems are a functionality greater than 2, a multiplicity of pendant or terminally positioned -SH functional groups per average molecule, a low-level of mercaptan-like odour and a molecular weight in the range of about 94 to 20,000. The polythiol components are also described in US Patent Specification Nos. 3,898,349 and 4,008,341 which are incorporated herein by way of reference.

Examples of preferred relatively odourless polythiol compositions include poly-β-mercaptoacetate or poly-β-mercaptopropionate esters, in particular the pentaerythritol tetra esters or trimethylolpropane triesters are preferred. Specific examples include, but are not limited to, pentaerythritol tetrakis (β-mercaptopropionate), pentaerythritol tetrakis (thioglycolate), ethylene glycol bis (thioglycolate) and trimethylopiopane tris (thioglycolate).

The non-acidic nitroso compound for use in the invention comprises a functional moiety of structure

$$-N=O$$

The structure of the remainder of the Nitroso containing compound is not thought to be important provided it does not contain acidic groups such as phenol.

A wide range of nitroso compounds may be used in the thiolene compositions of the invention, as exemplified by the following non-limiting examples e.g. N-nitroso amines, N-nitroso amino acids and N-nitroso amides having the group - N-NO, including aliphatic amines such as N-nitrosodiethylamine, aromatic amines or amino acids or amides such as N-nitrosobenzylethylamines, N-nitroso-N-phenyl glycine, N-methyl-N-nitroso-p-toluene sulphonamide and 4-nitroso-N,N-dimethylaniline, complexes such as the aluminium and ammonium salts of N-nitroso-phenylhydroxylamine, dimers such as the tert-nitrosobutane dimer and alcohols such as 2-nitroso-1-naphthol; other examples of suitable nitroso compounds include nitrosobenzene, 2-methyl-2-nitrosopropane, 1-nitrosopyrrolidine and 5-nitroso-2,4,6-triaminopyrimidine.

N-nitroso hydroxylamine derivatives suitable for use in the thiolene compositions of the invention may be broadly defined by the formula

$$[RN(NO)O]_nR^2 \quad \text{wherein}$$

R is an aliphatic, alicyclic or aromatic group preferably having 1 to 18 carbon atoms, optionally substituted with a halogen, hydroxyl or cyano group; $R^2$ is hydrogen, a group I to III metal, a group VIIIB metal or a substituted or unsubstituted $NH_4$ group; and n=1-5 corresponding to the positive charge number of $R^2$.

Particularly preferred nitroso compounds are the N-nitrosophenylhydroxylamine salts, more particularly the ammonium and aluminium salts. Of the two salts, the aluminium salt is preferred as it is not a known carcinogen and does not discolour the polythioether product.

The structure of the preferred aluminium salt is shown below

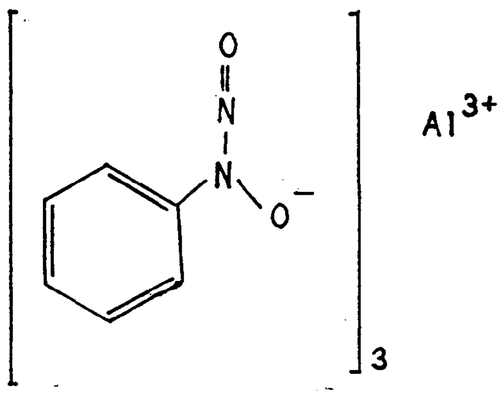

IV

Other nitroso compounds which could be used in the compositions of this invention are the nitroso dimers, or monomers corresponding to the nitroso dimers, listed in U.S. Patent Specification No. 4,168,982 which is incorporated herein by way of reference.

The concentrations employed in the composition depend on the unsaturated compound/initiator system employed and the polythiol employed. The concentration is generally between about 0.001% and about 8% by weight based on the total composition, as concentrations greater than 8% may inhibit photopolymerization. The preferred concentration range is 0.007% to 2.0% by weight. The amounts of the nitroso compound used may be substantially in excess of the limit of 1.0 part by weight suggested in EP 0,289,852 A1.

Polymerization is usually initiated by a free-radical generating system which furnishes free radicals when activated by radiation. Preferably, the free-radical generating system absorbs radiation within the 200 to 800 nm range. Although the polyene component may generate a free radical when exposed to actinic radiation, cure initiators or accelerators are often included in the formulations in order to accelerate curing. The curing period required is determined by the source of radiation (e.g. sunlight, UV light source), nature and concentration of the photocuring rate accelerator or initiator, temperature, and the molecular weight and functionality of the polyene and polythiol. Examples of typical photo-curing rate accelerators or initiators are azobenzene, benzophenone, 2,2-dimethoxy-2-phenylacetophenone, 1-benzoylcyclohexanol, methyl ethyl ketone and carbon tetrachloride. The initiator or accelerator component is used in the amounts usually employed with conventional thiolene systems. Typically, the cure initiating component is present in the range 0.05 to 8%, more typically 0.5% to 5% by weight of the composition.

The photocuring rate accelerator may be present as a separate component in the composition, (e.g. azobenzene), as a mixture of two or more separate components (e.g. benzophenone; carbon tetrachloride and Phenanthrene and the like), or chemically combined with the polyene component. Alternatively, the photocuring rate accelerator may be formed in situ.

Similarly, the polyene and polythiol may be formed in situ in the photocurable composition, without departing from the scope of the invention.

The compositions of the invention may also include, as required, ingredients such as antioxidants, dyes, activators, another prepolymer or polymer, solvent, filler, diluent, pigment, thixotropic agent, surface active agents and the like.

The mechanism by which addition of the nitroso compound prevents premature polymerization of the compositions when stored at ambient temperature while excluding light is not fully understood. It would appear that the thermal and photostability of the compositions are inter-related and that the nitroso compounds increase the overall stability of multifunctional thiolene formulations.

The invention is illustrated by the following non-limiting Examples in which the following abbreviations are used:

| | |
|---|---|
| U.V.4 | Stabiliser composition available from Floridienne (U.K.) Ltd. Watford, England, which, following analysis, has been found to comprise the aluminium salt of N-nitrosophenylhydroxylamine at approximately 0.9%, a plasticiser at approximately 70%, a polymerization accelerator at approximately 25% and a dispersant or coating modifier at approximately 5%, by weight. |
| Q43 | Pentaerythritol tetra-3-mercaptopropionate. |
| Monomer A | Triallylisocyanurate |
| Monomer B | Tri(ethylene glycol)dimethacrylate |
| Monomer C | Trimethylolpropanetrimethacrylate |

| | |
|---|---|
| Monomer D | 1,3-Butylene Glycol dimethacrylate |
| Monomer E | Poly(ethylene gylcol) dimethacrylate |
| ST1 | Hydroquinone |
| ST2 | 2,6-Di-t-butyl-4-methylphenol (Topanol OC, Imperial Chemical Industries) |
| ST3 | N-hydroxyethyl ethylenediamine triacetic acid $Na_3$ salt aqueous solution (Versenol 120, Dow Chemical Company) |
| ST4 | N-vinyl-2-pyrrolidone |
| ST5 | Acrylic Acid |
| ST6 | Phosphorous Acid |
| ST7 | Tinuvin 1130 (Ciba-Geigy) |

Stability tests are generally conducted at elevated temperature e.g. 82°C in order to complete the tests in a reasonable time period. The extrapolation of such test results to stability at ambient temperature is well recognised by those skilled in the art.

In the Examples, five different thiol-ene compositions based in different 'ene monomers were each tested with 7 different conventional stabilisers and with U.V.4 stabiliser composition (described above). The conventional stabilisers were added at the normal use levels while the quantity of U.V.4 used reflects the fact that the aluminium salt of N-nitroso phenylhydroxylamine is only present in U.V.4 at less than 1%.

As the tests described in earlier Irish Patent Application No. 3638/89 had shown that the presence of photoinitiator had no effect on the dark instability reaction, no photoinitiators were used in the tests described herein, in order to avoid any risk of confusing results due to stray light. However a photoinitiator would be added in a conventional amount (e.g. 2% by weight) when a composition is formulated for industrial use.

The test results are set out in the following tables:

Formulations (parts by weight)

Table 1

| | 1 | 2 | 3 | 4 | 5 | 6 | 7 | 8 | 9 |
|---|---|---|---|---|---|---|---|---|---|
| Q43 | 57.5 | 57.5 | 57.5 | 57.5 | 57.5 | 57.5 | 57.5 | 57.5 | 57.5 |
| Monomer A | 38.9 | 38.9 | 38.9 | 38.9 | 38.9 | 38.9 | 38.9 | 38.9 | 38.9 |
| ST 1 | | 0.02 | | | | | | | |
| ST 2 | | | 0.02 | | | | | | |
| ST 3 | | | | 0.02 | | | | | |
| ST 4 | | | | | 0.02 | | | | |
| ST 5 | | | | | | 0.02 | | | |
| ST 6 | | | | | | | 0.02 | | |
| ST 7 | | | | | | | | 0.02 | |
| U.V. 4 | | | | | | | | | 1.0 |
| Stability @ 82°C (Hrs.) | 67 | 74 | 67 | 67 | 67 | 67 | 67 | 67 | 216 |

Formulations (parts by weight)

Table 2

| | 1 | 2 | 3 | 4 | 5 | 6 | 7 | 8 | 9 |
|---|---|---|---|---|---|---|---|---|---|
| Q43 | 30.5 | 30.5 | 30.5 | 30.5 | 30.5 | 30.5 | 30.5 | 30.5 | 30.5 |
| Monomer B | 35.75 | 35.75 | 35.75 | 35.75 | 35.75 | 35.7 | 35.7 | 35.7 | 35.7 |
| ST 1 | | 0.02 | | | | | | | |
| ST 2 | | | 0.02 | | | | | | |
| ST 3 | | | | 0.02 | | | | | |
| ST 4 | | | | | 0.02 | | | | |
| ST 5 | | | | | | 0.02 | | | |
| ST 6 | | | | | | | 0.02 | | |
| ST 7 | | | | | | | | 0.02 | |
| U.V. 4 | | | | | | | | | 1.0 |
| Stability @ 82°C (Hrs.) | 4.25 | 4.5 | 4.25 | 8 | 4.25 | 4.25 | 2-18* | 4.25 | 9 |

*Stability @ 23°C 18 Hrs.

Formulations (parts by weight)

Table 3

| | 1 | 2 | 3 | 4 | 5 | 6 | 7 | 8 | 9 |
|---|---|---|---|---|---|---|---|---|---|
| Q43 | 30.5 | 30.5 | 30.5 | 30.5 | 30.5 | 30.5 | 30.5 | 30.5 | 30.5 |
| Monomer C | 28.25 | 28.25 | 28.25 | 28.25 | 28.25 | 28.25 | 28.25 | 28.25 | 28.25 |
| ST 1 | | 0.02 | | | | | | | |
| ST 2 | | | 0.02 | | | | | | |
| ST 3 | | | | 0.02 | | | | | |
| ST 4 | | | | | 0.02 | | | | |
| ST 5 | | | | | | 0.02 | | | |
| ST 6 | | | | | | | 0.02 | | |
| ST 7 | | | | | | | | 0.02 | |
| U.V. 4 | | | | | | | | | 1.0 |
| Stability @ 82°C (Hrs.) | 1 | 1 | 1 | 1.25 | 1 | 1 | 1 | 1 | 3.33 |

Formulations (parts by weight)

Table 4

| | 1 | 2 | 3 | 4 | 5 | 6 | 7 | 8 | 9 |
|---|---|---|---|---|---|---|---|---|---|
| Q43 | 30.5 | 30.5 | 30.5 | 30.5 | 30.5 | 30.5 | 30.5 | 30.5 | 30.5 |
| Monomer D | 28.25 | 28.25 | 28.25 | 28.25 | 28.25 | 28.25 | 28.25 | 28.25 | 28.25 |
| ST 1 | | 0.02 | | | | | | | |
| ST 2 | | | 0.02 | | | | | | |
| ST 3 | | | | 0.02 | | | | | |
| ST 4 | | | | | 0.02 | | | | |
| ST 5 | | | | | | 0.02 | | | |
| ST 6 | | | | | | | 0.02 | | |
| ST 7 | | | | | | | | 0.02 | |
| U.V. 4 | | | | | | | | | 1.0 |
| Stability @ 82°C (Hrs.) | 2.25 | 2.25 | 4 | 4 | 2.25 | 2.25 | 4 | 2.25 | 4.33 |

Formulations (parts by weight)

Table 5

| | 1 | 2 | 3 | 4 | 5 | 6 | 7 | 8 | 9 |
|---|---|---|---|---|---|---|---|---|---|
| Q43 | 30.5 | 30.5 | 30.5 | 30.5 | 30.5 | 30.5 | 30.5 | 30.5 | 30.5 |
| Monomer C | 42 | 42 | 42 | 42 | 42 | 42 | 42 | 42 | 42 |
| ST 1 | | 0.02 | | | | | | | |
| ST 2 | | | 0.02 | | | | | | |
| ST 3 | | | | 0.02 | | | | | |
| ST 4 | | | | | 0.02 | | | | |
| ST 5 | | | | | | 0.02 | | | |
| ST 6 | | | | | | | 0.02 | | |
| ST 7 | | | | | | | | 0.02 | |
| U.V. 4 | | | | | | | | | 1.0 |
| Stability @ 82$^{o}$C (Hrs.) | 1 | 1 | 1 | 1.25 | 1 | 1 | 1 | 1 | 3.33 |
| Stability @ 23$^{o}$C (Hrs.) | <2 | <24 | <24 | <24 | <24 | <24 | <24 | <24 | >>100 |

The following are the mole concentrations and mole ratios of the thiol and 'ene used in the above Examples. The mole ratio is the ratio of reactive carbon-carbon unsaturated groups to thiol groups.

| Table | 'Ene Monomer | 'Ene Concentration (Moles) | Thiol Concentration (Moles) | Mole Ratio |
|---|---|---|---|---|
| 1 | A | 0.156 | 0.118 | 1/1 |
| 2 | B | 0.125 | 0.0624 | 1/1 |
| 3 | C | 0.0836 | 0.0624 | 1/1 |
| 4 | D | 0.125 | 0.0624 | 1/1 |
| 5 | E | 0.125 | 0.0624 | 1/1 |

**Claims**

**1.** Polymerizable composition comprising
(i) a 'ene compound having at least two acrylate or allyl groups per average molecule (not being a bicyclic compound or having a polybutadiene backbone),
(ii) a compound having at least two pendant or terminally positioned -SH functional groups per average

molecule, said -SH functional groups being approximately in molar equivalence with unsaturated groups in the 'ene compound, and
(iii) a stabilizing amount of a non-acidic nitroso compound.

2. A composition according to Claim 1 which further comprises an effective amount of a free radical initiator and/or a photocuring rate accelerator.

3. A composition according to Claim 1 wherein the nitroso compound contains the group -N-NO.

4. A composition according to Claim 3 wherein the nitroso compound is an N-nitroso amine, amino acid or amide.

5. A composition according to Claim 4 wherein the nitroso compound is a hydroxylamine derivative of the formula

$$[RN(NO)O]_nR^2$$

wherein
R is an aliphatic, alicyclic or aromatic group, optionally substituted with a halogen, hydroxyl or cyano group;
$R^2$ is hydrogen, a group I to III metal, a group VIIIB metal or substituted or unsubstituted $NH_4$ group; and
n=1-5 corresponding to the positive charge number of $R^2$.

6. A composition according to Claim 5 wherein the nitroso compound is the aluminium or ammonium salt of N-nitrosophenylhydroxylamine.

European Patent Office

# EUROPEAN SEARCH REPORT

Application Number

EP 91 30 9846

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,X | EP-A-0 289 852 (HITACHI CHEMICAL CO., LTD.)<br>* page 3, line 20 - page 4, line 5 *<br>* page 4, line 38 - page 5, line 14; claims 1,2,4-6; examples 1,2 *<br>--- | 1-6 | C08K5/32<br>C08G75/04 |
| D,P,X | EP-A-0 428 342 (LOCTITE (IRELAND) LTD.) 22 May 1991<br>* page 6, line 11 - page 8, line 2; claims 1-10 *<br>--- | 1-6 | |
| A | US-A-4 230 740 (J.D. MOYER)<br>* column 1, line 27 - line 56 *<br>* column 2, line 4 - line 68 *<br>* column 5, line 5 - line 19; claim 1; example 2 *<br>--- | 1 | |
| A | GB-A-1 528 031 (KANSAI PAINT CO.,)<br>* claims *<br>----- | 1-4 | |
| | | | TECHNICAL FIELDS SEARCHED (Int. Cl.5 ) |
| | | | C08K<br>C08G |

The present search report has been drawn up for all claims

| Place of search | Date of completion of the search | Examiner |
|---|---|---|
| THE HAGUE | 21 FEBRUARY 1992 | FUHR C.K.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)